# EUROPEAN PATENT SPECIFICATION

(11) **EP 2 982 816 B1**
(45) Date of publication and mention of the grant of the patent: **04.01.2017**
(21) Application number: 15178832.0
(22) Date of filing: 29.07.2015
(51) Int. Cl.: E04H 15/60, F16B 7/10, F16B 7/14

(54) **SYSTEM OF TELESCOPIC SHAFTS**
TELESCOPSTANGEN
TIGES TELESCOPIQUES

(30) Priority: 08.08.2014 IT MI20141482
(43) Date of publication of application: 10.02.2016
(73) Proprietor: Brunner S.r.l., 39100 Bolzano (IT); Schneider, Helmut, 35460 Staufenberg (DE)
(72) Inventor: Schneider, Helmut, D-35460 Staufenberg (DE)
(74) Representative: Ciceri, Fabio

(56) References cited:
- WO-A1-01/19661
- DE-A1- 3 033 398
- DE-A1- 4 202 046
- DE-A1-102010 035 991
- GB-A- 1 486 967

## Description

### TECHNICAL FIELD

The present invention relates to a telescopic rod system, i.e. a system of rods that can assume a plurality of configurations in which the overall height of the rod system ranges from a minimum height to a maximum height.

### BACKGROUND OF THE INVENTION

Telescopic rod systems are used in a very large number of applications, every time that rods of varying length are needed (such as in tripods for photographic devices) and/or when the rods are required to have a reduced size when not in use (such as in tubular frames of camping tents).

Telescopic rod systems are composed of two or more rods, slidably fitting one into another. In the rest state, i.e. when not in use, the inner rods are entirely (or almost entirely) held within the outermost rod, such that the overall size is substantially equal to the size of the outermost rod. When in use, the inner rods are pulled out of the outer rod and rigidly joined to one another and to the outer rods to form a single rod of the desired length.

The rods are rigidly joined to one another in a plurality of modes.

In a first mode, each rod has retractable sliders at a first end, that can radially project out of the rod. The rods also have a plurality of holes for the above mentioned sliders to extend therethrough. Thus, as the slider of a rod is introduced into the hole of another rod, the two rods are longitudinally locked, which means that they can no longer slide one into the other. While this rod-coupling system is easy to use, it still has the serious drawback of only allowing discrete longitudinal connections between rods, which means that the rods cannot be locked to each other in any position. This is because rods can be only coupled to each other at the above-mentioned holes.

One mode that can solve the above drawback is to equip each rod, at one end, with a collar having a threaded hole with a bolt to be engaged therein. When an inner rod is pulled out of the outer rod to the required extent, the bolt of the collar of the outer rod is tightened into the threaded hole to extend therethrough and contact the inner rod. The clamping action of the bolt locks the inner rod relative to the outer rod. Nevertheless, this coupling mode is affected by the drawback of requiring additional parts (i.e. the collar and the bolt) with the rods, which will increase manufacturing costs. Furthermore, if the bolt is tightened too vigorously, the inner rod might be deformed and permanently damaged by the bolt.

DE3033398, WO 01/19661, GB 1486967 and DE 4202046 disclose telescopic rod systems having first and second tubular rods, each having an inner surface and an outer surface, where the inner surface of the first rod and the outer surface of the second rod have respective first elliptically extending sections, whereas the length of the semimajor axis of the first elliptical section of the inner surface of the first rod is greater than the length of the semimajor axis of the first elliptical section of the outer surface of the second rod, and the length of the semiminor axis of the first elliptical section of the inner surface of the first rod is smaller than the length of the semimajor axis of the first elliptical section of the outer surface of the second rod.

In the light of the above described prior art, the technical purpose of the present invention is to provide a telescopic rod system that obviates the above drawbacks.

Particularly, one object of the present invention is to provide a telescopic rod system that is easy to use.

Another object of the present invention is to provide a telescopic rod system that allows the inner rod to be coupled to the outer rod in any position.

A further object of the present invention is to provide a telescopic rod system that has a long operating life.

### SUMMARY OF THE INVENTION

According to the present invention, the technical purpose and the intended objects are fulfilled by a telescopic rod system as defined by the features of one or more of the annexed claims.

### BRIEF DESCRIPTION Of THE DRAWINGS

The features and advantages of the invention will appear from the following detailed description of an embodiment, which is illustrated without limitation in the annexed drawings, in which:
- Figure 1 shows a schematic perspective view of a telescopic rod system of the present invention;
- Figure 2 shows a schematic view of a section of the telescopic rod system of Figure 1 as taken along the plane A-A;
- Figure 3 shows the section of Figure 2 in a different operating position of the rods;
- Figure 4 shows a schematic view of a non claimed embodiment of a section of a rod of the telescopic rod system of Figure 1 as taken along the plane B-B;
- Figure 5 shows a schematic view of a non claimed embodiment of a section of a further rod of the telescopic rod system of Figure 1 as taken along the plane B-B;
- Figures 6 and 7 show schematic views of claimed embodiments of the rods; and
- Figures 8 and 9 show schematic views of alternative embodiments of the rods of Figures 4 and 5.

It shall be noted that the dimensions and proportions of the rods as shown in the above figures are intended to be schematic and not drawn to scale, the dimensions and proportions being intentionally altered from reality, for better illustration of certain details of the invention.

### DETAILED DESCRIPTION OF THE INVENTION

Referring to the accompanying figures, a telescopic rod system of the invention has been generally designated by numeral 1.

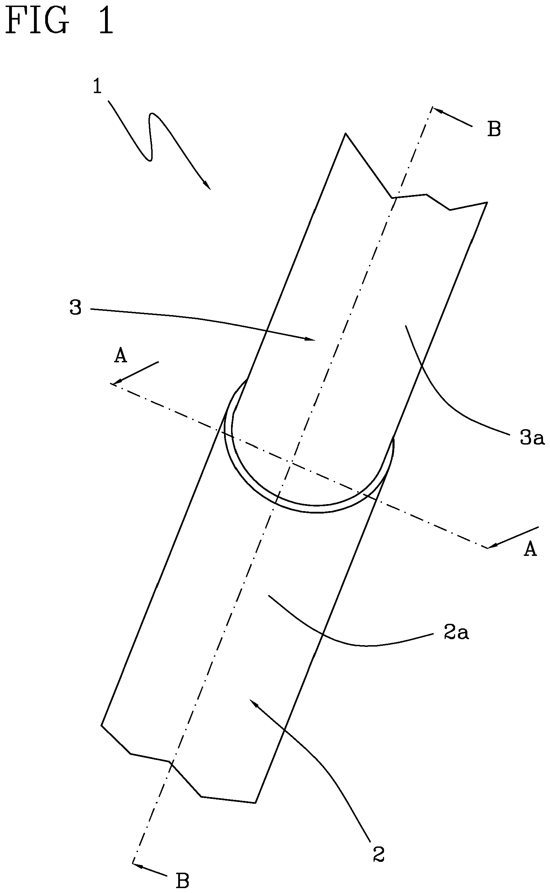

The system 1 comprises at least one first tubular rod 2 and one second tubular rod 3, each having an outer surface 2a, 3a and an inner surface 2b, 3b. The distance between the inner and outer surfaces of the rods defines the thickness of each rod. For simplicity, reference will be made herein and in the annexed figures to a two-rod telescopic system. Nevertheless, the telescopic rod system of the present invention may comprise any number of rods, i.e two or more. Figure 1 shows an exemplary telescopic system, in which the junction area of the first rod 2 and the second rod 3 is highlighted.

The first rod 2 and the second rod 3 have a mainly straight longitudinal direction of extension and have a hollow interior. Particularly, the inner through cavity of each rod is delimited by its respective inner surface.

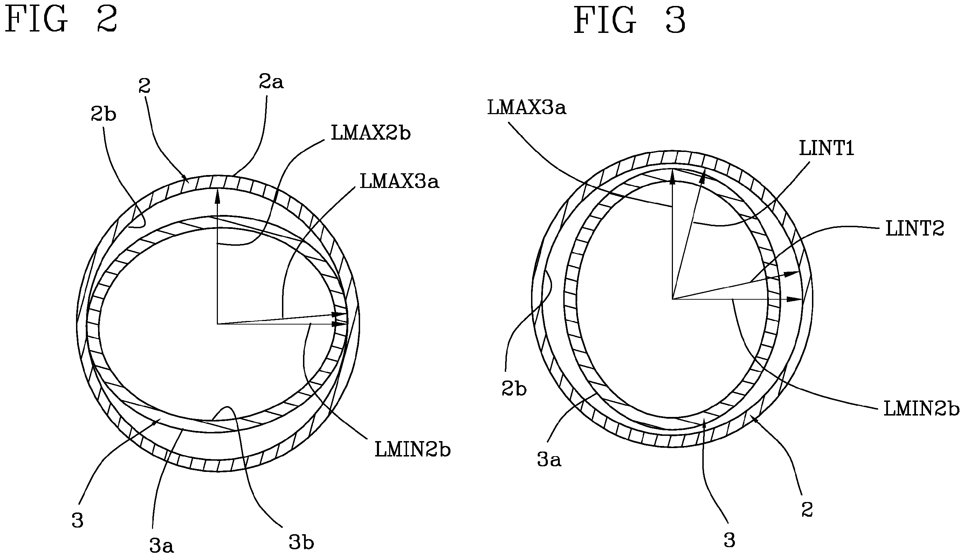

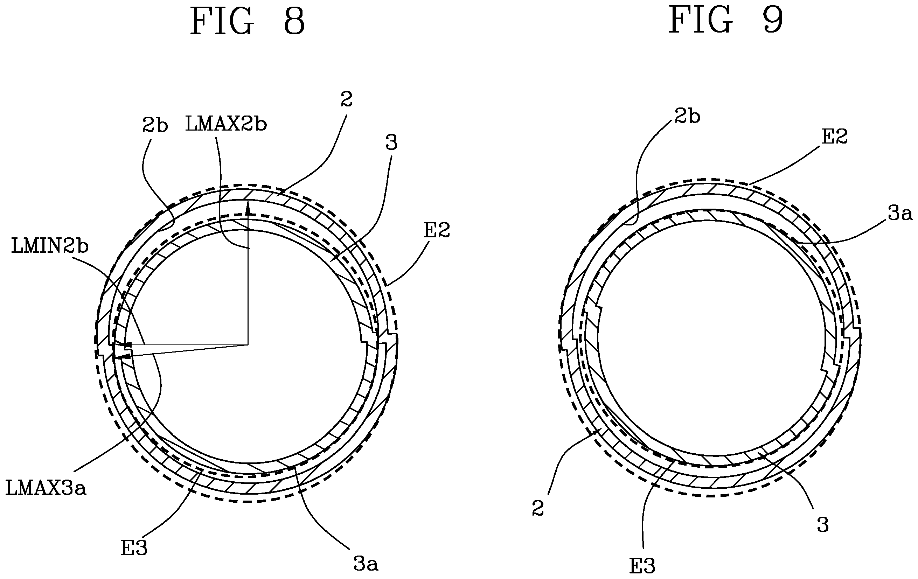

The inner surface 2b of the first rod 2 and the outer surface 3a of the second rod 3 have respective first elliptically extending sections or sections that can be inscribed in an ellipse, transverse to the longitudinal direction of extension. In other words, by cutting each rod 2, 3 along a plane perpendicular to the main direction of extension of the rods, at least one elliptically-extending section (as shown in Figures 2 and 3) or a section that can be inscribed in an ellipse E2, E3 (as shown in Figures 8 and 9) can be found. As better explained hereinafter, there may be one of such above-mentioned first elliptical sections or a plurality of them for each rod. The length LMAX2b of the semimajor axis of the first elliptical section of the inner surface 2b of the first rod 2 is greater than the length LMAX3a of the semimajor axis of the first elliptical section of the outer surface 3a of the second rod 3. The length LMIN2b of the semiminor axis of the first elliptical section of the inner surface 2b of the first rod 2 is smaller than the length LMAX3a of the semimajor axis of the first elliptical section of the outer surface 3a of the second rod 3.

Thus, when the second rod 3 is introduced into the first rod 2 such that the semiminor axis LMIN2b of the first elliptical section of the inner surface 2b of the first rod 2 is not aligned with the semimajor axis LMAX3 of the first elliptical section of the outer surface 3a of the second rod 3 (like in the configuration of Figures 3 and 9), the second rod 3 is free to slide in the first rod 2. When the second rod 3 is rotated (about a longitudinal axis parallel to the main axis of extension of the rods) relative to the first rod 2 at their respective first elliptical sections, an interference is created between the first elliptical section of the second rod 3 and the first elliptical section of the first rod 2 (configuration of Figures 2 and 8). Such mechanical interference slidably connects the two rods to each other and holds them in position. It shall be noted that no external accessories, such as pins, collars, bolts or screws are provided to hold the two rods of the telescopic system in their extended position.

Particularly, in order to facilitate the operating steps of the telescopic system, i.e. to facilitate the rotation of the second rod 3 in the first rod 2 and allow mechanical interference to occur between the above-mentioned elliptical sections, the length of the semimajor axis LMAX3a of the first elliptical section of the outer surface 3a of the second rod 3 falls between the lengths of a first semiaxis LINT1 and a second semiaxis LINT2 of the first elliptical section of the inner surface 2b of the first rod 2, where the first semiaxis LINT1 forms an angle of 5 degrees with the semiminor axis LMIN2b and the second semiaxis LINT2 forms an angle of 80 degrees with the semiminor axis LMIN2b of the inner surface 2b of the first elliptical section of the first rod 2 (see Figure 3). This allows the second rod 3 to freely rotate relative to the first rod 2 (from the configuration as shown in Figure 3) in a range from 10 to 85 degrees in ether direction, before the above-mentioned mechanical interference occurs.

Preferably, the first semiaxis LINT1 forms an angle of 5 degrees with the semiminor axis LMIN2b and the second semiaxis LINT2 forms an angle of 40 degrees with the semiminor axis LMIN2b of the first elliptical section of the inner surface 2b of the first rod 2. In the preferred embodiment of the invention, the first semiaxis LINT1 and the second semiaxis LINT2 coincide and form an angle of 10 degrees with the semiminor axis LMIN2 of the first elliptical section of the inner surface 2b of the first rod 2. In other words, the second rod 3 freely rotates in the first rod 2 through an angle of about 80 degrees in either direction (from the configuration of Figure 3), before mechanical interference between the elliptical sections occurs.

Preferably, the ratio of the length of the semimajor axis to the length of the semiminor axis of the first elliptical sections of the first and second rods is equal to the ratio of the length of the semimajor axis to the length of the semiminor axis of the second ellptical sections of the first and second rods.

In order to allow the second rod 3 to be locked to the first rod 2 in any position of the longitudinal extent of the rods, the first elliptical section of the inner surface 2b of the first rod 2 and the first elliptical section of the outer surface 3a of the second rod 3 extend along substantially the entire longitudinal extent of their respective rods 2, 3.

In this embodiment, the two rods 2, 3 are right prisms, with the inner surface 2b of the first rod 2 and the outer surface 3a of the second rod having a constant elliptical shape along the entire extent of the rod. Preferably, the outer surface 2a of the first rod 2 and the inner surface 3b of the second rod 3 also extend with an elliptical shape that is identical to the elliptical shape along which their respective inner and outer surfaces extend. By this arrangement the number of rods of the telescopic system may be increased as desired.

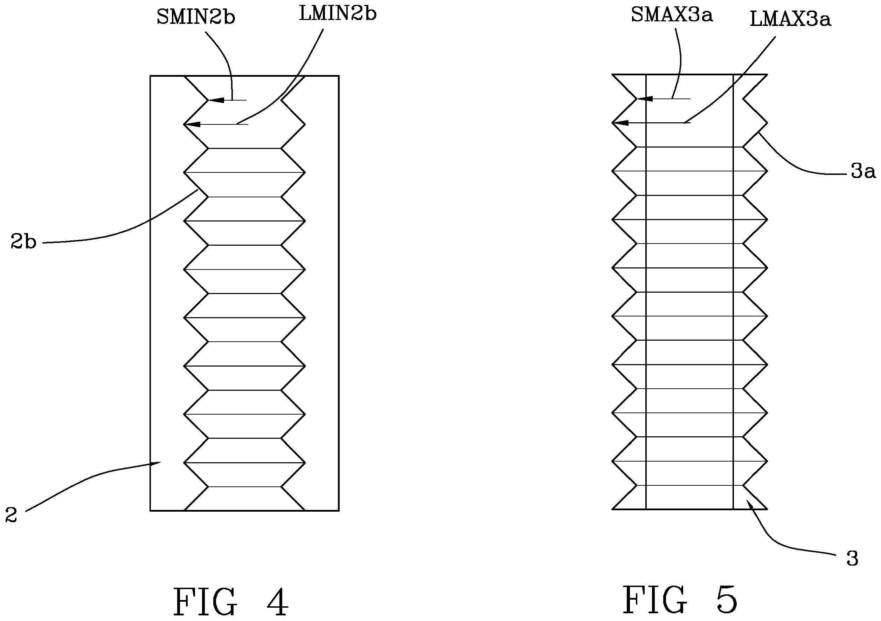

In an alternative embodiment, as shown in Figures 4 and 5, second elliptical sections are provided for the inner surface 2b of the first rod 2 and the outer surface 3a of the second rod 3. The term second elliptical section is intended to mean a section of the rods extending along a plane perpendicular to the main direction of extension of the rods. In other words, this elliptical section is provided in addition to the first elliptical section. In this embodiment, a plurality of first elliptical sections and a plurality of second elliptical sections are provided. The first elliptical sections of each rod alternate with the second elliptical sections of the same rod, as shown in Figures 4 and 5.

The length of the semimajor axis of the second elliptical section of the inner surface 2b of the first rod 2 is greater than the length of the semimajor axis SMAX3a of the second elliptical section of the outer surface 3a of the second rod 3, and the length of the semiminor axis SMIN2b of the second elliptical section of the inner surface 2b of the first rod 2 is smaller than the length of the semimajor axis SMAX3a of the second elliptical section of the outer surface 3a of the second rod 3 (in the same manner as described concerning the first elliptical section). The size ratios of the second elliptical sections are identical to the above-described size ratios of the first elliptical sections of the two rods.

Particularly, the lengths of the semimajor axes SMAX3a of the second elliptical sections are smaller than the lengths of the semimajor axes LMAX3a of the first elliptical sections of the outer surface 3a of the second rod 3, and the lengths of the semiminor axes SMIN2b of the second elliptical sections are smaller than the lengths of the semiminor axes LMIN2b of the first elliptical sections of the inner surface 2b of the first rod 2. Thus, when the second rod 3 is rotated in the first rod 2, the second elliptical sections exert the above-mentioned mutual mechanical interference, and further act as shoulders to increase the strength of the longitudinal connection of the two rods, for highly stable coupling.

In order to connect together the first and second elliptical sections of each rod, a plurality of intermediate elliptical sections extend between a first and a second elliptical sections, and have identical size ratios between semimajor axes and semiminor axes, such ratios being the same as the ratio between semimajor axes and semiminor axes of the first and second elliptical sections. This is because the ratio of the length of the semimajor axis to the length of the semiminor axis of the first elliptical sections of the first and/or second rods is equal to the ratio of the length of the semimajor axis to the length of the semiminor axis of the second ellptical sections of the first and/or second rods. The plurality of elliptical sections have increasing lengths of the semimajor axis and semiminor axis, from the second elliptical section to the first elliptical section.

In the embodiment of Figures 4 and 5, the first and second elliptical sections extend on parallel planes, perpendicular to the longitudinal direction of extension of the respective rods.

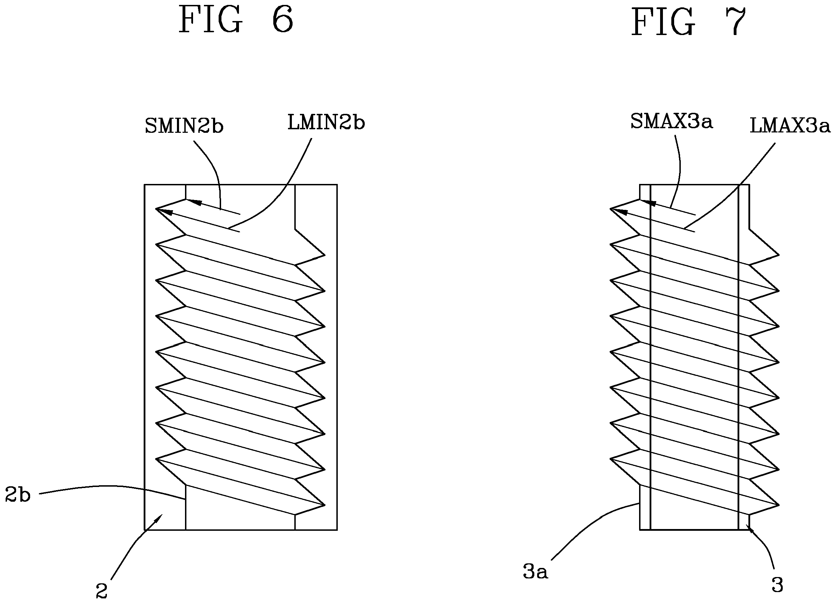

The embodiment of Figures 6 and 7, is identical to the emvodimen of Figures 4 and 5, except that the first and second elliptical sections extend on parallel planes, which are inclined to the longitudinal direction of extension of the respective rods.

The above disclosure clearly shows the easy use and operation of the telescopic rod system of the present invention, with mutual rotation of the rods being sufficient for stable and mutual connection therebetween.

Such telescopic rod system may be advantageously used to form frames for camping structures and/or manufacture avalanche probes and/or make beach umbrella poles, and/or similar applications.

Of course, those skilled in the art may make number of changes and variants to the configurations as described hereinbefore to meet specific and contingent needs, such as by providing three or more rods, coupled together as described above, with each rod fitted into another rod. Also, the outer surface of the rod with the greatest diameter (i.e. the rod that contains all the other rods) may be arranged to extend with a circular shape, instead of an elliptical shape. All of these variants and changes fall within scope of the invention, as defined in the following claims.

## Claims

1. A telescopic rod system, comprising:
- at least one first tubular rod (2) and one second tubular rod (3), each having an outer surface (2a, 3a) and an inner surface (2b, 3b), said first rod (2) and second rod (3) having a mainly straight longitudinal direction of extension, the inner surface (2b) of the first rod (2) and the outer surface (3a) of the second rod (3) having respective first elliptically extending sections or sections that can be inscribed in an ellipse (E2, E3), transverse to said longitudinal direction of extension, the length of the semimajor axis (LMAX2b) of the first elliptical section of the inner surface (2b) of the first rod (2) being greater than the length of the semimajor axis (LMAX3a) of the first elliptical section of the outer surface (3a) of the second rod (3), and the length of the semiminor axis (LMIN2b) of the first elliptical section of the inner surface (2b) of the first rod (2) being smaller than the length of the semimajor axis (LMAX3a) of the first elliptical section of the outer surface (3a) of the second rod (3),
- second respective elliptical sections of the inner surface (2b) of the first rod (2) and the outer section (3a) of the second rod (3); the length of the semimajor axis of the second elliptical section of the inner surface (2b) of the first rod (2) being greater than the length of the semimajor axis (SMAX3a) of the second elliptical section of the outer surface (3a) of the second rod (3), and the length of the semiminor axis (SMIN2b) of the second elliptical section of the inner surface (2b) of the first rod (2) being smaller than the length of the semimajor axis (SMAX3a) of the second elliptical section of the outer surface (3a) of the second rod (3); said first and second elliptical sections alternating with each other along the longitudinal extent of their respective rods,
- the lengths of the semimajor axes (SMAX3a) of the second elliptical sections being smaller than the lengths of the semimajor axes (LMAX3a) of the first elliptical sections of the outer surface (3a) of the second rod (3), and the lengths of the semiminor axes (SMIN2b) of the second elliptical sections are smaller than the lengths of the semiminor axes ()LMIN2b) of the first elliptical sections of the inner surface (2b) of the first rod (2),
**characterized in that** the first and second elliptical sections extend on parallel planes, inclined to the longitudinal direction of extension of the respective rods.

2. A telescopic rod system as claimed in claim 1, wherein the the length of the semimajor axis (LMAX3a) of the first elliptical section of the outer surface (3a) of the second rod (3) falls between the lengths of a first semiaxis (LINT1) and a second semiaxis (LINT2) of the first elliptical section of the inner surface (2b) of the first rod (2), wherein said first semiaxis (LINT1) forms an angle of 5 degrees with the semiminor axis (LMIN2b) and said second semiaxis (LINT2) forms an angle of 80 degrees with the semiminor axis (LMIN2b) of the inner surface (2b) of the first elliptical section of the first rod (2).

3. A telescopic rod system as claimed in claim 2, wherein said first semiaxis (LINT1) forms an angle of 5 degrees with the semiminor axis (LMIN2b) and said second semiaxis (LINT2) forms an angle of 40 degrees with the semiminor axis (LMIN2b) of the first elliptical section of the inner surface (2b) of the first rod (2), preferably said first and second semiaxes (LINT1, LINT2) being coincident and forming an angle of 10 degrees with the semiminor axis (LMIN2b) of the first elliptical section of the inner surface (2b) of the first rod (2).

4. A telescopic rod system as claimed in any of the preceding claims, wherein said first elliptical section of the inner surface (2b) of the first rod (2) and said first elliptical section of the outer surface (3a) of the second rod (3) extend along substantially the entire longitudinal extent of their respective rods.

5. A telescopic rod system as claimed in any of claims 1 to 3, wherein the ratio of the length of the semimajor axis to the length of the semiminor axis of the first elliptical sections of the first and second rods is equal to the ratio of the length of the semimajor axis to the length of the semiminor axis of the second ellptical sections of the first and second rods.

6. A use of a telescopic rod system as claimed in any of the preceding claims, to form frames for camping structures and/or manufacture avalanche probes and/or make beach umbrella poles.

## Patentansprüche

1. Teleskopstangensystem, umfassend:
- wenigstens eine erste rohrförmige Stange (2) und eine zweite rohrförmige Stange (3), die jeweils eine Außenfläche (2a, 3a) und eine Innenfläche (2b, 3b) aufweisen, wobei die erste Stange (2) und die zweite Stange (3) eine vorwiegend gerade Längsauszugsrichtung aufweisen, wobei die Innenfläche (2b) der ersten Stange (2) und die Außenfläche (3a) der zweiten Stange (3) jeweils erste ellipsenförmige Auszugsquerschnitte oder -Querschnitte aufweisen, die in einer Ellipse (E2, E3) eingeschrieben werden können, die quer zur Längsauszugsrichtung verläuft, wobei die Länge der Halbhauptachse (LMAX2b) des ersten ellipsenförmigen Querschnitts der Innenfläche (2b) der ersten Stange (2) größer als die Länge der Halbhauptachse (LMAX3a) des ersten ellipsenförmigen Querschnitts der Außenfläche (3a) der zweiten Stange (3) ist und die Länge der Halbnebenachse (LMIN2b) des ersten ellipsenförmigen Querschnitts der Innenfläche (2b) der ersten Stange (2) kleiner als die Länge der Halbhauptachse (LMAX3a) des ersten ellipsenförmigen Querschnitts der Außenfläche (3a) der zweiten Stange (3) ist,
- jeweilige zweite ellipsenförmige Querschnitte der Innenfläche (2b) der ersten Stange (2) und des Außenquerschnitts (3a) der zweiten Stange (3); wobei die Länge der Halbhauptachse des zweiten ellipsenförmigen Querschnitts der Innenfläche (2b) der ersten Stange (2) größer als die Länge der Halbhauptachse (SMAX3a) des zweiten ellipsenförmigen Querschnitts der Außenfläche (3a) der zweiten Stange (3) ist und die Länge der Halbnebenachse (SMIN2b) des zweiten ellipsenförmigen Querschnitts der Innenfläche (2b) der ersten Stange (2) kleiner als die Länge der Halbhauptachse (SMAX3a) des zweiten ellipsenförmigen Querschnitts der Außenfläche (3a) der zweiten Stange (3) ist; wobei die ersten und die zweiten ellipsenförmigen Querschnitte längs der Längsausdehnung ihrer jeweiligen Stangen abwechslungsweise angeordnet sind,
- wobei die Längen der Halbhauptachsen (SMAX3a) der zweiten ellipsenförmigen Querschnitte kleiner als die Längen der Halbhauptachsen (LMAX3a) der ersten ellipsenförmigen Querschnitte der Außenfläche (3a) der zweiten Stange (3) sind und die Längen der Halbnebenachsen (SMIN2b) der zweiten ellipsenförmigen Querschnitte kleiner als die Längen der Halbnebenachsen (LMIN2b) der ersten ellipsenförmigen Querschnitte der Innenfläche (2b) der ersten Stange (2) sind, **dadurch gekennzeichnet, dass** die ersten und die zweiten ellipsenförmigen Querschnitte sich auf parallelen Ebenen erstrecken, die zur Längsauszugsrichtung der jeweiligen Stangen hin geneigt sind.

2. Teleskopstangensystem nach Anspruch 1, wobei die Länge der Halbhauptachse (LMAX3a) des ersten ellipsenförmigen Querschnitts der Außenfläche (3a) der zweiten Stange (3) zwischen die Längen einer ersten Halbachse (LINT1) und einer zweiten Halbachse (LINT2) des ersten ellipsenförmigen Querschnitts der Innenfläche (2b) der ersten Stange (2) fällt, wobei die erste Halbachse (LINT1) einen Winkel von 5 Grad mit der Halbnebenachse (LMIN2b) bildet und die zweite Halbachse (LINT2) einen Winkel von 80 Grad mit der Halbnebenachse (LMIN2b) der Innenfläche (2b) des ersten ellipsenförmigen Querschnitts der ersten Stange (2) bildet.

3. Teleskopstangensystem nach Anspruch 2, wobei die erste Halbachse (LINT1) einen Winkel von 5 Grad mit der Halbnebenachse (LMIN2b) bildet und die zweite Halbachse (LINT2) einen Winkel von 40 Grad mit der Halbnebenachse (LMIN2b) des ersten ellipsenförmigen Querschnitts der Innenfläche (2b) der ersten Stange (2) bildet, wobei die erste und die zweite Halbachse (LINT1, LINT2) vorzugsweise zusammenfallen und einen Winkel von 10 Grad mit der Halbnebenachse (LMIN2b) des ersten ellipsenförmigen Querschnitts der Innenfläche (2b) der ersten Stange (2) bilden.

4. Teleskopstangensystem nach einem beliebigen der vorstehenden Ansprüche, wobei der erste ellipsenförmige Querschnitt der Innenfläche (2b) der ersten Stange (2) und der erste ellipsenförmige Querschnitt der Außenfläche (3a) der zweiten Stange (3) sich im Wesentlichen längs des gesamten Längsauszugs ihrer jeweiligen Stangen erstrecken.

5. Teleskopstangensystem nach einem beliebigen der Ansprüche 1 bis 3, wobei das Verhältnis zwischen der Länge der Halbhauptachse und der Länge der Halbnebenachse der ersten ellipsenförmigen Querschnitte der ersten und der zweiten Stange gleich dem Verhältnis zwischen der Länge der Halbhauptachse und der Länge der Halbnebenachse der zweiten ellipsenförmigen Querschnitte der ersten und der zweiten Stange ist.

6. Verwendung eines Teleskopstangensystems nach einem beliebigen der vorstehenden Ansprüche, um Rahmen für Campingstrukturen zu bilden und/oder Lawinensonden und/oder Sonnenschirmpfosten herzustellen.

## Revendications

1. Système de tige télescopique, comprenant :
- au moins une première tige tubulaire (2) et une deuxième tige tubulaire (3), ayant chacune une surface extérieure (2a, 3a) et une surface intérieure (2b, 3b), lesdites première tige (2) et deuxième tige (3) ayant une direction d'extension longitudinale principalement droite, la surface intérieure (2b) de la première tige (2) et la surface extérieure (3a) de la deuxième tige (3) ayant des premières sections respectives s'étendant de manière elliptique ou des sections qui peuvent être inscrites dans une ellipse (E2, E3), transversale à ladite direction d'extension longitudinale, la longueur du demi-grand axe (LMAX2b) de la première section elliptique de la surface intérieure (2b) de la première tige (2) étant supérieure à la longueur du demi-grand axe (LMAX3a) de la première section elliptique de la surface extérieure (3a) de la deuxième tige (3), et la longueur du demi-petit axe (LMIN2b) de la première section elliptique de la surface intérieure (2b) de la première tige (2) étant inférieure à la longueur du demi-grand axe (LMAX3a) de la première section elliptique de la surface extérieure (3a) de la deuxième tige (3),
- des deuxièmes sections elliptiques respectives de la surface intérieure (2b) de la première tige (2) et la section extérieure (3a) de la deuxième tige (3) ; la longueur du demi-grand axe de la deuxième section elliptique de la surface intérieure (2b) de la première tige (2) étant supérieure à la longueur du demi-grand axe (SMAX3a) de la deuxième section elliptique de la surface extérieure (3a) de la deuxième tige (3), et la longueur du demi-petit axe (SMIN2b) de la deuxième section elliptique de la surface intérieure (2b) de la première tige (2) étant inférieure à la longueur du demi-grand axe (SMAX3a) de la deuxième section elliptique de la surface extérieure (3a) de la deuxième tige (3) ; lesdites première et deuxième sections elliptiques s'alternant entre elles suivant l'extension longitudinal de leurs tiges respectives,
- les longueurs des demi-grands axes (SMAX3a) des deuxièmes sections elliptiques étant inférieures aux longueurs des demi-grands axes (LMAX3a) des premières sections elliptiques de la surface extérieure (3a) de la deuxième tige (3), et les longueurs des demi-petits axes (SMIN2b) des deuxièmes sections elliptiques sont inférieures aux longueurs des demi-petits axes (LMIN2b) des premières sections elliptiques de la surface intérieure (2b) de la première tige (2),
**caractérisé en ce que** les première et deuxième sections elliptiques s'étendent sur des plans parallèles, inclinés par rapport à la direction d'extension longitudinale des tiges respectives.

2. Système de tige télescopique selon la revendication 1, dans lequel la longueur du demi-grand axe (LMAX3a) de la première section elliptique de la surface extérieure (3a) de la deuxième tige (3) se situe entre les longueurs d'un premier demi-axe (LINT1) et d'un deuxième demi-axe (LINT2) de la première section elliptique de la surface intérieure (2b) de la première tige (2), dans lequel ledit premier demi-axe (LINT1) forme un angle de 5 degrés avec le demi-petit axe (LMIN2b) et ledit deuxième demi-axe (LINT2) forme un angle de 80 degrés avec le demi-petit axe (LMIN2b) de la surface intérieure (2b) de la première section elliptique de la première tige (2).

3. Système de tige télescopique selon la revendication 2, dans lequel ledit premier demi-axe (LINT1) forme un angle de 5 degrés avec le demi-petit axe (LMIN2b) et ledit deuxième demi-axe (LINT2) forme un angle de 40 degrés avec le demi-petit axe (LMIN2b) de la première section elliptique de la surface intérieure (2b) de la première tige (2), de préférence lesdits premier et deuxième demi-axes (LINT1, LINT2) étant coïncidents et formant un angle de 10 degrés avec le demi-petit axe (LMIN2b) de la première section elliptique de la surface intérieure (2b) de la première tige (2).

4. Système de tige télescopique selon l'une quelconque des revendications précédentes, dans lequel ladite première section elliptique de la surface intérieure (2b) de la première tige (2) et ladite première section elliptique de la surface extérieure (3a) de la deuxième tige (3) s'étendent sensiblement le long de toute l'extension longitudinale de leurs tiges respectives.

5. Système de tige télescopique selon l'une quelconque des revendications 1 à 3, dans lequel le rapport entre la longueur du demi-grand axe et la longueur du demi-petit axe des premières sections elliptiques des première et deuxième tiges est égal au rapport entre la longueur du demi-grand axe et la longueur du demi-petit axe des deuxièmes sections elliptiques des première et deuxième tiges.

6. Utilisation d'un système de tige télescopique selon l'une quelconque des revendications précédentes, pour former des armatures pour des structures de camping et/ou fabriquer des sondes à avalanche et/ou réaliser des piquets de parasol.
